# EUROPEAN PATENT SPECIFICATION

(11) **EP 2 629 625 B1**
(45) Date of publication and mention of the grant of the patent: **30.08.2017**
(21) Application number: 11771127.5
(22) Date of filing: 17.10.2011
(51) Int. Cl.: A23C 11/04

(54) **WHITENER COMPOSITION**
AUFHELLUNGSZUSAMMENSETZUNG
COMPOSITION D'AGENT DE BLANCHIMENT

(30) Priority: 19.10.2010 EP 10187970
(43) Date of publication of application: 28.08.2013
(73) Proprietor: Nestec S.A., 1800 Vevey (CH)
(72) Inventor: MORAN HERNANDEZ, Noelia, CH-3012 Bern (CH); ZELTNER, Peter, CH-3048 Worblaufen (CH); BERTOLI, Constantin, CH-3510 Konolfingen (CH)
(74) Representative: Elleby, Gudrun
(86) International application number: PCT/EP2011/068105
(87) International publication number: WO 2012/052397

(56) References cited:
- WO-A1-2008/002139
- WO-A2-2010/040727
- GB-A- 652 485
- GB-A- 832 377
- JP-A- 2009 153 491
- JP-A- 2010 004 741
- US-A- 4 239 786
- US-A1- 2008 193 624

## Description

### Technical field

The invention relates to a whitener composition, specifically for a beverage, and the use of such a whitener composition in various liquid bases to provide a beverage having a lower content of saturated fatty acids than current products.

### Background

Whitener compositions for beverages ("beverage whiteners") are known in the art. Beverage whiteners are sometimes named "beverage creamers". Many beverage whiteners are provided in dry powder form and are intended for addition to beverages that, in the perception or according to the preference of the consumer, require whitening, lightening or creaming. Whitener formulations are also available in liquid or frozen form. Liquid beverage whiteners are often encountered in single serve packaging, such as capsules, as well as multi-serve packaging.

Typically, a powder beverage whitener contains about 30 to 90% carbohydrates, to 65% fat, 1 to 15% emulsification agents and 0.5 to 4% stabilization salts. Generally, powdered whiteners are produced by spray-draying an emulsion containing the whitener components.

GB652485 relates to a process for preparing products suitable for baby nutrition wherein a dispersion is made from whey.
JP 2010/004741 relates to oil-and-fat composition for liquid cream having a low content of trans fatty acid, and suitable particularly for liquid cream used for canned coffee.
WO 2008/002139 relates to oil-based additive for a beverage.
US 4,239,786 relates to a coffee whitener and use of fluid shortening therein. benefits provided by these creamy beverages. The consumer, however, does not want to renounce creamy beverages such as creamy coffee beverages due to their taste and stimulating character but would like to have added health benefits to these beverages.

It is therefore an object of the invention to provide a versatile whitener for beverages of any kind which has a reduced saturated fatty acid content while maintaining the pleasant creamy mouth-feel of the current products upon consumption of the beverage. Of course, such a whitener should also meet technical requirements for spray-drying, and stability over shelf-life.

### Summary of the invention

The whitener composition of the present invention comprises a specific oil blend that provides a fat profile with reduced saturated fatty acids compared to current whiteners, while maintaining processability and shelf life.

In a first aspect, the invention relates to a powder whitener composition for beverages comprising, per 100 g of fat:
- from 12 g to 17 g of lauric acid,
- from 28 g to 37 g of palmitic acid,
- from 23 g to 31 g of *cis* mono-unsaturated fatty acids,
- from 5 g to 8 g of *cis* poly-unsaturated fatty acids,
wherein saturated fatty acids represent from 57 g to 65 g per 100 g of the fat content.

The invention, and various embodiments thereof, is defined in the appended claims.

### Short description of the drawing

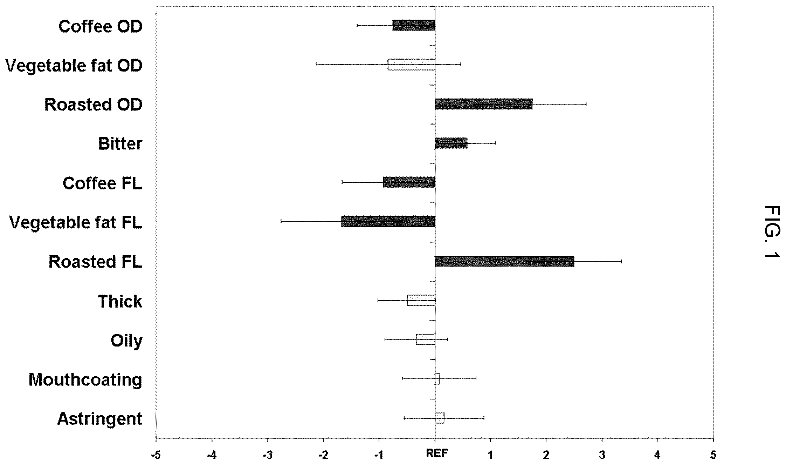

Figure 1 shows the sensory profile of a coffee beverage containing a whitener made according to the invention, compared with a reference whitener.

### Short description of the drawing

Figure 1 shows the sensory profile of a coffee beverage containing a whitener made according to the invention, compared with a reference whitener.

### Detailed description of the invention

The whitener compositions of the present invention have been found to provide a fat profile with lower saturated fatty acids content compared to current whiteners used in beverages. It should be understood that fatty acids are included in the whitener compositions as triglycerides of said fatty acids. Reference is made to the fatty acid content of the whitener composition, so that a comparison is possible with other beverage whiteners.

Throughout the description, percentages are by weight, based on the dry matter of the compositions, unless stated otherwise.

As used herein, the terms "instant beverage" and "soluble beverage" are used interchangeably to refer to a beverage product such as instant or soluble coffee, tea or chocolate products that are readily soluble in water, specifically hot water and are typically mixed with a liquid base such as an aqueous liquid or diluents, i.e. water, milk or other aqueous mediums to provide a ready-to-serve or ready-to-drink beverage.

The whitener compositions of the invention are in a dry mix or powder form and are prepared by the consumer, according to directions, at or near the time of serving and/or consumption.

According to the present invention, the whitener composition comprises saturated fatty acids in an amount of 57 to 65% based on the fat content. In a preferred embodiment of the present invention, the fatty acids are comprised in an amount of 58 to 64% based on the fat content. Preferably, the fat blend is of vegetal origin. It can be prepared by blending several vegetable oils or oil fractions, such that the desired composition is reached.

In addition, the whitener composition of the present invention has a minimum fat content of 2%. Preferably, the whitener composition has a fat content from 2 to 65% by weight of the whitener composition, and more preferably a fat content from 15 to 50% by weight of the whitener composition.

It has been shown that a whitener composition comprising the saturated fatty acids in the indicated amounts has a strong whitening power when added to a beverage. The Rancimat induction period of the fat phase is more than 20 hours at a temperature of 120°C. The taste is pleasant. The storage capabilities are comparable to non-gassed fully hydrogenated vegetable oils.

The whitener composition of the invention advantageously does not need to contain antioxidants. If desired, however, food grade antioxidants can be added in usual amounts.

The whitener composition of the present invention comprises lauric acid and palmitic acid in an amount of 12 to 17% and 28 to 37% by weight of the fat content, respectively. It may also comprise other saturated fatty acids in an amount of 8 to 10% based on the fat content, such as myristic acid(C 14:0) and stearic acid (C 18:0) in amounts of 3 to 5% and 3.5 to 3.9% by weight, respectively, based on the fat content. The overall saturated fatty acid content of the whitener composition should not exceed 65% by weight of the fat content. An excess of saturated fatty acids would go contrary to the objective of reducing the content of such components.

As discussed above, the whitener composition comprises *cis* mono-unsaturated fatty acids in an amount of 23 to 31% based on the fat content. *Cis* mono-unsaturated fatty acids preferably include oleic acid (C 18:1). Preferably, oleic acid is present in an amount of 25.1 to 27.5% by weight of the fat content of the beverage whitener. Other food-grade *cis* mono-unsaturated fatty acids may also be included in the fat blend, such as palmitoleic acid (C 16:1).

The whitener composition of the present invention also comprises *cis*polyunsaturated fatty acids in an amount of 5 to 8% based on the fat content. The polyunsaturated fatty acids may be selected from linoleic (C 18:2) and alpha-linolenic acid (C 18:3). Other food-grade *cis* polyunsaturated fatty acids may also be included in the fat blend, such as gamma-linolenic acid (C 18:3), arachidonic acid (C 20:4). However, in a preferred embodiment, the fat blend does not contain fatty acids with more than 3 unsaturations. In another embodiment, the fat blend does not contain fatty acids with more than 2 unsaturations.

According to the invention, there are no restrictions of the source of fatty acids in the composition. Preferably, they are provided as vegetable oils and vegetable oil blends. They may be provided as triglycerides.

The whitener composition of the present invention may also contain other ingredients such as emulsification agents, carbohydrates and stabilization salts.

Usually, an emulsification agent, for example sodium caseinate, is necessary to stabilize the whitener composition. The emulsification agent represents preferably from 1.5 to 3% by weight of the whitener composition, more preferably from 2 to 2.8% by weight of the whitener composition.

The whitener composition of the present invention may also contain a carbohydrate component. In principle, carbohydrates having a low sweetening power are preferred. The amount of carbohydrate may be varied. Typically, the carbohydrate may be present in an amount of 30 to 90 by weight of the whitener composition. Sweeteners include natural and artificial sweeteners known in the art.

Usually, the whitener composition may also comprise a combination of stabilization salts to stabilize the entire compositions. Examples of suitable stabilization salts are alkali metal phosphates such as potassium/sodium phosphate. The amount of the stabilization salts should be 0.5 to 4% by weight of the whitener composition.

Hence, the whitener composition may comprise emulsification agents, carbohydrates, stabilization salts, or mixes of emulsification agents and carbohydrates, mixes of emulsification agents and stabilization salts, mixes of carbohydrates and stabilization salts, or mixes of emulsification agents, carbohydrates and stabilization salts.

In addition flowing agents like silicon dioxide may be used.

The whitener composition may further contain a protein source such as milk solid non-fat (SNF). Typically, the content of the protein source in the whitener composition is 0.1 to 70% by weight of the whitener composition.

If appropriate, the whitener composition contains a foaming agent. Suitable foaming agents are, for example, an edible water-soluble carbonate or bicarbonate salt that evolves carbon dioxide when it reacts with an acid component contained in the composition.

According to the present invention, the whitener composition is provided in powder form. This powder can be obtained by spray-drying of an oil-in-water emulsion. The emulsion is prepared by homogenization of a wet mix of the several ingredients of the whitener composition.

The specific fatty acid distribution in the whitener composition enables the emulsion to resist to spray-drying conditions. In addition, the final powder product is shelf-stable, and it resists to oxidation despite the presence of polyunsaturated fatty acids which can impart an off-taste and/or an off-flavor (e.g. fishy taste) to the composition. Finally, the final powder product can be reconstituted in warm or hot media such as coffee, tea and waterwithout phase separation.

In a particular embodiment of the invention, the beverage is an instant soluble beverage product or a ready-to-drink beverage. When in the form of an instant soluble beverage product, the beverage component is in powder form. Instant soluble beverage products, such as soluble coffee, soluble tea or chocolate powder, are well-known in the art. When in the form of ready-to-drink beverage product, the beverage component is in liquid form and the whitener composition is emulsified in the liquid beverage component.

The instant beverage as well as the ready-to-drink beverage is dilutable with a liquid base which is then prepared by the consumer.

It has been surprisingly shown that the specific fatty acid profile contained in the whitener composition of the present invention is suitable for applications which meet the today's requirements. The whitener composition of the present invention provides a pleasant mouth feel, especially body, smoothness and mouthcoating while maintaining odours and flavours of the beverages containing them. In addition, the whitener composition of the present invention is easily soluble in hot beverages such as coffee or tea without phase separation.

### Example

A whitener was produced with 59.4% carbohydrates, 34% fat blend, 2.6% emulsification agents (sodium caseinate and fat-based emulsifiers), 2% stabilization salts (potassium/sodium phosphate) and 3% moisture. It was produced by mixing of the ingredients to create an emulsion, which was heat-treated, homogenized and spray-dried on conventional equipment.

The composition of the fat blend is shown in the table bellow:

**Fatty acid composition (g/100 g fat)**

| | | |
|---|---|---|
| C 12:0 | Lauric acid | 12.9 |
| C 14:0 | Myristic acid | 5.0 |
| C 16:0 | Palmitic acid | 36. |

produced by mixing of the ingredients to create an emulsion, which was heat-treated, homogenized and spray-dried on conventional equipment.

The composition of the fat blend is shown in the table below:

**Fatty acid composition (g/100 g fat)**

| | | |
|---|---|---|
| C 12:0 | Lauric acid | 12.9 |
| C 14:0 | Myristic acid | 5.0 |
| C 16:0 | Palmitic acid | 36. |
| C 18:0 | Stearic acid | 3.7 |
| C 18:1 | Oleic acid and other *cis* mono-unsaturated | 26.9 |
| C 18:2 | Linoleic acid | 6.2 |
| Other fatty acids | | 2.9 |

Figure 1 shows the comparison between the sensory profile of the whitener made according to the example above, with a reference whitener produced with fully hydrogenated coconut oil. Two tablespoons of whitener were added to 150mL of coffee beverage prepared with NESCAFE as indicated on the packaging
The attributes that were analysed are coffee, vegetable fat, roasted odors (OD) and flavors (FL), bitterness and mouthfeel attributes (thickness, oiliness, mouthcoating, astringency).

The bars represent the sensory difference between the two whitened coffees. The reference is shown as the central axis. Deviations of the example whitener over the reference are shown with bars. A dark grey bar means that the difference between the two samples is significant for the attribute.

The results show that the whitener made according to the example above exhibits a mouthfeel similar to the reference whitener.

## Claims

1. A powder whitener composition for beverages comprising a fat blend having the following composition per 100 g of fat:
- from 12 g to 17 g of lauric acid,
- from 28 g to 37 g of palmitic acid,
- from 23 g to 31 g of *cis* mono-unsaturated fatty acids,
- from 5 g to 8 g of *cis* poly-unsaturated fatty acids,
wherein saturated fatty acids represent from 57 g to 65 g per 100 g of the fat content.

2. The whitener composition according to claim 1 wherein the saturated fatty acids further comprise myristic acid, stearic acid, or mixes of myristic acid and stearic acid.

3. The whitener composition according to claims 1 or 2, wherein the *cis* mono-unsaturated fatty acids comprise oleic acid.

4. The whitener composition according to any one of claims 1 to 3, wherein the *cis*-polyunsaturated fatty acids comprise linoleic acid, alpha-linolenic acid, or mixes of linoleic acid and alpha-linolenic acid.

5. The whitener composition according to any one of claims 1 to 4 further containing emulsification agents, carbohydrates, stabilisation salts, or mixes of emulsification agents and carbohydrates, mixes of emulsification agents and stabilisation salts, mixes of carbohydrates and stabilisation salts, or mixes of emulsification agents, carbohydrates and stabilisation salts.

6. The whitener composition according to any one of claims 1 to 5, having a fat content of at least 2% by weight of the whitener composition, preferably a fat content from 2 to 65% by weight of the whitener composition, and more preferably a fat content from 15 to 50% by weight of the whitener composition.

7. The whitener composition according to any one of claims 1 to 6, wherein the fatty acids are provided as triglycerides.

## Patentansprüche

1. Pulverförmige Aufhellungszusammensetzung für Getränke, umfassend eine Fettmischung mit der folgenden Zusammensetzung pro 100 g Fett:
- von 12 g bis 17 g Laurinsäure,
- von 28 g bis 37 g Palmitinsäure,
- von 23 g bis 31 g einfach ungesättigte *cis*-Fettsäuren,
- von 5 g bis 8 g mehrfach ungesättigte *cis*-Fettsäuren,
wobei gesättigte Fettsäuren 57 g bis 65 g pro 100 g des Fettgehalts ausmachen.

2. Aufhellungszusammensetzung nach Anspruch 1, wobei die gesättigten Fettsäuren ferner Myristinsäure, Stearinsäure oder Gemische von Myristinsäure und Stearinsäure umfassen.

3. Aufhellungszusammensetzung nach Anspruch 1 oder 2, wobei die einfach ungesättigten *cis*-Fettsäuren Ölsäure umfassen.

4. Aufhellungszusammensetzung nach einem der Ansprüche 1 bis 3, wobei die mehrfach ungesättigten *cis*-Fettsäuren Linolsäure, alpha-Linolsäure oder Gemische von Linolsäure und alpha-Linolsäure umfassen.

5. Aufhellungszusammensetzung nach einem der Ansprüche 1 bis 4, ferner enthaltend Emulgatoren, Kohlenhydrate, Stabilisierungssalze oder Gemische von Emulgatoren und Kohlenhydraten, Gemische von Emulgatoren und Stabilisierungssalzen, Gemische von Kohlenhydraten und Stabilisierungssalze oder Gemische von Emulgatoren, Kohlenhydraten und Stabilisierungssalzen.

6. Aufhellungszusammensetzung nach einem der Ansprüche 1 bis 5, aufweisend einen Fettgehalt von wenigstens 2 Gew.-% der Aufhellungszusammensetzung, vorzugsweise einen Fettgehalt von 2 bis 65 Gew.-% der Aufhellungszusammensetzung, und mehr bevorzugt einen Fettgehalt von 15 bis 50 Gew.-% der Aufhellungszusammensetzung.

7. Aufhellungszusammensetzung nach einem der Ansprüche 1 bis 6, wobei die Fettsäuren als Trigylceride bereitgestellt werden.

## Revendications

1. Composition de blanchisseur en poudre pour des boissons, comprenant un mélange de matière grasse ayant la composition suivante pour 100 g de matière grasse :
- de 12 g à 17 g d'acide laurique,
- de 28 g à 37 g d'acide palmitique,
- de 23 g à 31 g d'acides gras *cis* mono-insaturés,
- de 5 g à 8 g d'acides gras *cis* polyinsaturés,
dans laquelle les acides gras saturés représentent de 57 g à 65 g pour 100 g de la teneur en matière grasse.

2. Composition de blanchisseur selon la revendication 1, dans laquelle les acides gras saturés comprennent en outre de l'acide myristique, de l'acide stéarique ou des mélanges d'acide myristique et d'acide stéarique.

3. Composition de blanchisseur selon les revendications 1 ou 2, dans laquelle les acides gras *cis* mono-insaturés comprennent de l'acide oléique.

4. Composition de blanchisseur selon l'une quelconque des revendications 1 à 3, dans laquelle les acides gras *cis*-polyinsaturés comprennent de l'acide linoléique, de l'acide alpha-linolénique ou des mélanges d'acide linoléique et d'acide alpha-linolénique.

5. Composition de blanchisseur selon l'une quelconque des revendications 1 à 4, comprenant en outre des agents d'émulsification, des glucides, des sels de stabilisation ou des mélanges d'agents d'émulsification et de glucides, des mélanges d'agents d'émulsification et de sels de stabilisation, des mélanges de glucides et de sels de stabilisation ou des mélanges d'agents d'émulsification, de glucides et de sels de stabilisation.

6. Composition de blanchisseur selon l'une quelconque des revendications 1 à 5, ayant une teneur en matière grasse d'au moins 2 % en poids de la composition de blanchisseur, de préférence une teneur en matière grasse de 2 à 65 % en poids de la composition de blanchisseur et plus préférablement une teneur en matière grasse de 15 à 50 % en poids de la composition de blanchisseur.

7. Composition de blanchisseur selon l'une quelconque des revendications 1 à 6, dans laquelle les acides gras sont fournis sous forme de triglycérides.
